Europäisches Patentamt

European Patent Office

Office européen des brevets

(11) Publication number: **0 121 308**
**B1**

## (12) EUROPEAN PATENT SPECIFICATION

(45) Date of publication of patent specification: **31.05.89**

(21) Application number: **84300942.4**

(22) Date of filing: **14.02.84**

(51) Int. Cl.⁴: **C 09 D 7/14, C 09 D 17/00**

(54) A method for producing a tinted paint.

(30) Priority: **01.03.83 GB 8305590**

(43) Date of publication of application:
**10.10.84 Bulletin 84/41**

(45) Publication of the grant of the patent:
**31.05.89 Bulletin 89/22**

(84) Designated Contracting States:
**BE DE FR GB IT NL**

(56) References cited:
**EP-A-0 022 746
DE-A-2 616 419
FR-A-2 183 840
FR-A-2 258 439
FR-A-2 286 865
FR-A-2 305 474**

(73) Proprietor: **IMPERIAL CHEMICAL INDUSTRIES
PLC
Imperial Chemical House Millbank
London SW1P 3JF (GB)**

(72) Inventor: **Graystone, Jonathan Albert
22, Farmers Way
Maidenhead Berkshire (GB)**
Inventor: **Snaith, Stephen Paul
31, Avebury, Castle Gardens
Slough Berkshire (GB)**

(74) Representative: **Cooper, Alan Victor et al
Imperial Chemical Industries PLC Legal
Department: Patents P.O. Box 6 Bessemer Road
Welwyn Garden City Hertfordshire AL7 1HD (GB)**

Courier Press, Leamington Spa, England.

## Description

This invention relates to a method for producing a tinted paint.

Paints are commercially available in a wide range of colours, the introduction of the colour having taken place on a large scale by the incorporation of suitable pigment at one or more stages during manufacture of the paint. For various reasons, for example in order to minimise the total stock of paint which need to be held by a supplier or to enable the sale of a very wide range of colours, it is frequently desired to produce a relatively small volume of paint having a specified colour or to modify an existing colour at, or near to, the point of sale of the paint. This is commonly effected by adding to a suitable base paint a measured amount of a concentrate of one or more pigments pre-dispersed in a medium which is compatible with, and promotes the ready dispersion of pigment in, the paint. This type of concentrate is sometimes termed a tinter.

One type of known concentrate for use in colouring paints, comprises pigment, dispersing agent and a liquid carrier, such as water and/or glycol. One or more such concentrates, depending upon the colour of paint which is desired, are volummetrically dispensed into a known volume of a base paint. Another type of known concentrate is in the form of a powder, or the powder may be compressed into a desired shape, which comprises a mixture of pigment and a dispersing agent. In the case of water-based paints, the dispersing agent may contain ionisable groups such as carboxyl groups which in their salt form promote the dispersion of pigment in water. One particular type of powdered concentrate is described for use in tinting paint by European patent specification EP 0 022 746A or for use in tinting woodstain by West German patent specification DE 2 616 419A. Both of these specifications describe concentrates comprising a dispersion of pigment in an easily softenable carrier material which has been ground to produce a powdered concentrate.

Disadvantages of these prior concentrates are, for example, that a dispersing agent may not be compatible with a film-forming or other component of the final paint and/or may adversely affect the properties of the final paint coating; the concentrate may be unstable to prolonged storage; and the concentrate may not in use promote the full tinting potential of the pigment. With the liquid concentrates there is a practical upper limit to the concentration of pigment due to its effect of increasing the viscosity of the concentrate; and since the pigment may settle out it is necessary to provide appropriate agitation. With the powder concentrates, due to their low bulk density, the volume concentration of pigment is correspondingly reduced. A disadvantage of the compressed forms of powder is that their preparation usually involves a costly multi-stage process.

Both the liquid and powder types of pigment concentrate require to be accurately measured before addition to a base paint to achieve a desired tint. The liquid concentrates may be measured in a volumetric pump and both liquid and powder concentrates may be measured by gravimetric weighing. These measurements require the use of expensive measuring equipment in paint dispensing machines employed at or near to the point of sale, for example in a retail shop, and the extent of use may not justify this expense. Pre-measurement of the concentrate into portions of known tinting effect, for example by pre-measurement of liquid or powder into suitable containers, will avoid the need for measurement at the point of sale and enables appropriate tinting by the addition of tinter to a base paint from a known number of containers. However, these containers must be emptied and this can be difficult to automate. When the powders are compressed, whilst the bulk density can be increased, the rate of dispersion is slower. We have now found that such disadvantages can be largely overcome by use of a predetermined number of counted out shaped, solid pigment concentrates to tint the paint. The new concentrates may be prepared by a process which does not involve the use of a solvent or other material which is liquid at ambient temperatures.

Accordingly this invention provides a method of producing a tinted paint which comprises counting out a predetermined number of shaped solid concentrates each containing a unit or other fixed quantity of pigment or pigment mixture appropriate to the tint required; adding the concentrates to a paint comprising a liquid continuous phase; and thereafter agitating the paint to cause complete dispersion of the concentrate in the liquid continuous phase.

Preferably the concentrate comprises a carrier material having a minimum softening point of 35°C and is itself dispersible in the liquid continuous phase of the paints. By the softening point of the carrier material we mean the softening point of the material as defined in American National Standard ASTM E28-67 (Reapproved 1977). The softening point of a material is defined therein as the temperature (°C) at which a specified form of disc of the material held within a horizontal ring is forced downward by a distance of 2.54cm (1 inch) under the weight of a specified steel ball as the material is heated in a water-glycerol bath at a rate prescribed in ASTM E28-67.

Each individual solid, shaped concentrate which is added to the paint comprises a unit, or other fixed, quantity of pigment, or a mixture of pigments, which is capable of imparting a known tint, or a component of a tint, to the paint. The deepness of the tint thus increases with an increase in the number of similar shaped concentrates added to the paint. Alternatively there may be different sizes or shapes or concentrate which contain different but fixed quantities of the same pigment or mixture of pigments may be used. In order to produce a wide range of tints it is obviously necessary to employ a range of shaped concentrates which each comprise a different pigment or mixture of pigments. Thus a desired tint may be obtained, for example, by adding to a paint one number of shaped concentrates comprising one pigment and another number of shaped concentrates comprising another pigment. It is one advantage of the solid shaped concentrates of this invention that they may be individually selected and/or counted as appropriate before addition to the paint.

Clearly a wide range of tinted paints may be produced from a paint, for example at the point of sale as selected by a customer from a display of colours, there being a predetermined combination and number of shaped, solid, pigment concentrates appropriate to each colour displayed.

Preferably the above method of tinting paints is at least partly automated and carried out in an apparatus for producing a tinted paint comprising a liquid continuous phase which apparatus comprises means for storing shaped, solid pigment concentrates; means for selecting the counting the number of shaped concentrates appropriate to the tint required; means for passing the concentrates to a vessel containing a base paint to be tinted; and means for ensuring complete dispersion of the concentrate in the paint.

Preferably the concentrate comprises a carrier material which has a maximum softening point of 110°C but higher softening points are possible. More preferably the softening point is in the range 60 to 100°C. In order to accelerate the dispersion of the pigment and associated carrier material into the paint, it may be necessary to liquefy the concentrate before or after addition to the composition by heating to a temperature greater than the minimum softening point of the carrier material. Preferably there is chosen a carrier material which at ambient temperatures will provide a shaped pigment concentrate which is unchanging in shape, i.e. it does not flow and has some rigidity. For example, if the concentrate is to be in the shape of a disc it is desirable to choose a carrier material which when stored does not permit such a shape to become deformed whether due to an increase in temperature or to an operative step in a machine from which it may be dispensed.

A primary requirement in the carrier material is that it is readily dispersible in the liquid phase of the paint to be tinted. For convenience, paints are often classified as comprising either an aqueous or a non-aqueous liquid as the liquid phase. The present invention is particularly concerned with paints having an aqueous liquid continuous phase but it is equally applicable to paints based on a non-aqueous continuous liquid phase. When the paint has an aqueous liquid phase it is understood that the total paint composition comprises at least 30% by weight of water. Other liquids which may be present in a composition together with water include lower alcohols and glycol ethers. A typical non-aqueous continuous phase comprises aliphatic hydrocarbon, for example white spirit.

Preferably the carrier material itself is soluble in and more preferably is highly soluble in, the liquid continuous phase of the paint when it is added in the solid state. If the softening point of the carrier material is suitably low, for example less than 100°C, then the dispersibility, including the solubility or miscibility, of the carrier material in the liquid phase may be improved by melting the material just before it is added to the coating composition. In general it is preferred that the carrier material is capable of immediate dispersion, for example dissolution, in the liquid phase in the shape in which it is stored before use without external aid apart from simple agitation. The rate of dissolution is obviously affected by the maximum thickness of any given shape. Nevertheless dispersion may be accelerated by for example initial mechanical disintegration or by the presence in the paint and/or the concentrate of specific dispersion aids such as acid or base or by mechanical agitation

In the preparation of a solid, shaped pigment concentrate of this invention the liquid carrier material in which the pigment has been dispersed may be solidified into a variety of shapes, for example in the shape of a rod, ribbon, fibre, sheet, granule, disc, lozenge, cube or other rectilinear form, or sphere, or other shape containing a known amount of pigment.

The shape of the concentrate may be determined by the design of apparatus which is employed to perform the tinting of the paint, for example due to the nature of the space within this apparatus for storing the shaped concentrate before use. The shape may also be determined by the rate of dissolution which can be obtained by the use of a particular shape, or by the ease of manufacture of a particular shape. Particularly preferred shapes in which the concentrate is used are those where there is a high ratio of surface area to volume.

The dispersion of the pigment in the liquid carrier material may be carried out in conventional equipment such as is used for example in mixing thermoplastic polymers with pigment, plasticiser and other additives. It should be noted that the dispersion of pigment in this way entails less wastage than in the preparation of liquid concentrates. The dispersion of pigment in carrier material and the production of a required shape of concentrate may be achieved using one or more specific types of apparatus. The dispersion of pigment may be carried out for example, in a compounding extruder, a series of rollers, or a z-blade mixer. An intermediate form of shaped concentrate may be first produced, for example, as a coil of extrudate. The final shaped concentrate may be produced from the pigment dispersion or from an intermediate shape at a later stage, for example by a cutting or moulding process.

As well as being itself dispersible, and preferably highly soluble, in the liquid continuous phase of the paint it is also necessary that the carrier material is capable of dispersing the pigment throughout the paint and of ensuring that its tinting properties are well used. If desired, other materials may be present in the concentrate, for example to improve the dispersion of pigment or to improve the mechanical properties of the concentrate, for example by fibre reinforcement.

Carrier materials which are solid at ambient temperatures, which have a minimum softening point of 35°C and are suitable for use in the water-dispersible pigment concentrate of this invention include materials which comprise a strongly hydrophilic moiety such as a moiety of a poly-(ethylene oxide) e.g. a polyethylene glycol, poly-(vinyl alcohol) i.e. hydrolysed poly(vinyl acetate), poly(vinyl pyrrolidone) and poly[(meth)acrylamide]. Particularly suitable carrier materials include polyethylene glycols of molecular weight greater than 1000; simple esters of polyethylene glycols, alkyd resins in which a polyethylene glycol has been included as one component or which have been subsequently reacted with polyethylene glycol; and certain commercially available surfactants which comprise a poly(ethylene glycol) moiety.

Carrier materials which are solid at ambient temperatures and are suitable for use with paints which comprise aliphatic hydrocarbon as the liquid continuous phase include copolymers of tertiary butyl styrene with lauryl methacrylate or with 2-ethylhexyl acrylate.

The invention is illustrated by the following Examples in which parts and percentages are by weight.

EXAMPLE 1

7 parts of a phthalocyanine blue pigment, (commercially available under the Registered Trade Mark "Monastral") were dispersed in 3 parts of an adduct carrier material prepared by reacting 5 parts of polyethylene glycol (of molecular weight 1500) and 1 part of tall oil fatty acid using a Z-blade mixer fitted with a heating/cooling jacket to maintain the temperature in the range 40—100°C. The resulting product was cast and allowed to cool to ambient temperature in the shape of solid discs containing a known amount of pigment. The softening point of the adduct carrier material was 40°C. The discs were readily soluble in an acrylic emulsion base paint and could be used to tint this paint to any desired depth of shade. Up to 75% by weight of the blue pigment could be dispersed in the adduct to provide a useful concentrate.

EXAMPLE 2

7 parts of a yellow oxide pigment (commercially available as "Bayferrox" 390) were dispersed in 3 parts of an adduct prepared by reacting 2.8 parts of polyethylene glycol of molecular weight 1500 with 1 part of an alkyd resin (prepared by reacting pentaerythritol, trimellitic anhydride and tall oil fatty acid in the weight proportions 1/2.5/10. ("Bayferrox" is a trade mark).

The means of dispersion was a twin-screw extruder fitted with a heating/cooling jacket to maintain the temperature in the range 35—100°C. The product was moulded in the shape of a lozenge and allowed to cool to the ambient temperature. Each lozenge contained a known amount of pigment. The softening point of the adduct carrier material was 40°C. Concentrates containing up to 70% by weight of pigment could be prepared.

EXAMPLE 3

7 parts of a yellow pigment (commercially available under the Registered Trade Mark "Irgazin") were dispersed in 3 parts of the monomethyl ether of polyethylene glycol of molecular weight 2000 using a Z-blade mixer fitted with a heating/cooling jacket to maintain the temperature in the range 40—100°C. The product was extruded in the shape of a rod and allowed to cool to ambient temperature. Concentrates containing up to 70% by weight of the pigment could be prepared.

EXAMPLE 4

6 parts of a phthalocyanine blue pigment (commercially available under the Registered Trade Mark "Monastral") were dispersed in 4 parts of an adduct carrier material prepared by reacting 54.5 parts of tertiary butyl styrene and 45.5 parts of lauryl methacrylate using a Z-blade mixer fitted with a heating/cooling jacket to maintain the temperature in the range 60—100°C. The resulting product was pressed into discs and allowed to cool to ambient temperature. The discs were readily soluble in an alkyd based paint. The softening point of the copolymer was in the range 60—100°C.

EXAMPLE 5

6 parts of a phthalocyanine blue pigment (commercially available under the Registered Trade Mark "Monastral") were dispersed in 4 parts of an adduct carrier material prepared by reacting 56.5 parts of tertiary butyl styrene and 43.5 parts of 2-ethylhexyl acrylate. The means of dispersion was a Z-blade mixer fitted with a heating/cooling jacket to maintain the temperature in the range 60—100°C and the material was moulded into the shape of a lozenge and allowed to cool in ambient temperature. The softening point of the copolymer was in the range 60—100°C.

Claims

1. A method of producing a tinted paint which comprises counting out a predetermined number of shaped solid concentrates each containing a unit or other fixed quantity of pigment or pigment mixture appropriate to the tint required; adding the concentrates to a paint comprising a liquid continuous phase; and thereafter agitating the paint to cause complete dispersion of the concentrate in the liquid continuous phase.

2. A method according to Claim 1 wherein the concentrate comprises a dispersion of the pigment in a carrier material having a minimum softening point of 35°C and is itself dispersible in the liquid continuous phase of the paint.

3. A method according to Claim 2 wherein the carrier material has a maximum softening point of 110°C.

4. A method according to Claim 3 wherein the carrier material has a softening point in the range 60—100°C.

5. A method according to any one of Claims 1 to 4 wherein the concentrate is in the shape of a rod, ribbon, fibre, sheet, granule, disc, lozenge, cube or sphere.

**Patentansprüche**

1. Verfahren zur Herstellung einer gefärbten Anstrichfarbe, bei welchem eine vorbestimmte Anzahl von festen Konzentratformlingen gezählt wird, von denen jeder eine Einheit oder eine andere feste Menge eines Pigments oder Pigmentgemischs enthält, das der gewünschten Farbe entspricht; die Konzentratformlinge zu einer Anstrichfarbe hinzugegeben werden, die eine flüssige kontinuierliche Phase enthält; und hierauf die Anstrichfarbe gerührt wird, um eine vollständige Dispergierung der Konzentratformlinge in der flüssigen kontinuierlichen Phase zu erreichen.

2. Verfahren nach Anspruch 1, bei welchem die Konzentratformlinge aus einer Dispersion des Pigments in einem Trägermaterial bestehen, das einen Mindesterweichungspunkt von 35°C aufweist und selbst in der flüssigen kontinuierlichen Phase der Anstrichfarbe dispergierbar ist.

3. Verfahren nach Anspruch 2, bei welchem das Trägermaterial einen maximalen Erweichungspunkt von 110°C aufweist.

4. Verfahren nach Anspruch 3, bei welchem das Trägermaterial einen Erweichungspunkt im Bereich von 60 bis 100°C aufweist.

5. Verfahren nach einem der Ansprüche 1 bis 4, bei welchem die Konzentratformlinge als Stäbe, Bänder, Fasern, Tafeln, Granalien, Scheiben, Pastillen, Würfeln oder kugeln vorliegen.

**Revendications**

1. Procédé de production d'une peinture teintée, qui consiste à prélever par comptage un nombre prédéterminé de concentrés solides façonnés, chacun contenant une unité ou une autre quantité fixe d'un pigment ou d'un mélange de pigments approprié à la teinte requise, à ajouter les concentrés à une peinture comprenant une phase continue liquide, puis à agiter la peinture pour provoquer une dispersion totale du concentré dans la phase continué liquide.

2. Procédé suivant la revendication 1, dans lequel le concentré consiste en une dispersion du pigment dans une matière servant de véhicule ayant un point de ramollissement minimal de 35°C et étant ellemême dispersable dans la phase continue liquide de la peinture.

3. Procédé suivant la revendication 2, dans lequel la matière servant de véhicule présente un point de ramollissement maximal de 110°C.

4. Procédé suivant la revendication 3, dans lequel la matière servant de véhicule possède un point de ramollissement compris dans l'intervalle de 60 à 100°C.

5. Procédé suivant l'une quelconque des revendications 1 à 4, dans lequel le concentré est sous forme d'une baguette, d'un ruban, d'une fibre, d'une feuille, d'un granule, d'un disque, d'une tablette, d'un cube ou d'une sphère.